# FASCICULE DE BREVET EUROPEEN

(11) **EP 3 482 432 B1**
(45) Date de publication et mention de la délivrance du brevet: **14.10.2020**
(21) Numéro de dépôt: 17740701.2
(22) Date de dépôt: 07.07.2017
(51) Int. Cl.: H01M 2/26, H01M 4/70, H01M 10/04, H01M 10/052, H01M 10/0585, H01M 10/0525, H01M 4/13

(54) **ACCUMULATEUR ELECTROCHIMIQUE METAL-ION, A CAPACITE ELEVEE ET DONT LA SOUPLESSE PERMET UNE GRANDE CONFORMABILITE**
METALL-ION AKKUMULATOR MIT HOHE KAPAZITÄT, WESSEN FLEXIBILITÄT FÜR EINE HOHE GLEICHFÖRMICHKEIT DIENT
METAL ION ELECTROCHEMICAL ACCUMULATOR HAVING HIGH CAPACITY AND WHOSE FLEXIBILITY ALLOWS A HIGH CONFORMABILITY

(30) Priorité: 07.07.2016 FR 1656537
(43) Date de publication de la demande: 15.05.2019
(73) Titulaire: Commissariat à l'Énergie Atomique et aux Énergies Alternatives, 75015 Paris (FR)
(72) Inventeur: SALOMON, Jérémie, 38250 VILLARD DE LANS (FR); PERRAUD, Simon, 57600 FOLKLING (FR); KARST, Nicolas, 83150 BANDOL (FR)
(74) Mandataire: Nony
(86) Numéro de dépôt international: PCT/EP2017/067133
(87) Numéro de publication internationale: WO 2018/007606

(56) Documents cités:
- CN-A- 104 466 229
- US-A- 5 776 628
- US-A1- 2012 227 253
- US-A1- 2015 026 970

## Description

### Domaine technique

La présente invention concerne le domaine des générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un accumulateur électrochimique au lithium ou lithium-ion.

L'invention a trait à la réalisation d'un accumulateur électrochimique métal-ion qui présente à la fois une souplesse lui permettant une grande conformabilité et une capacité élevée.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Etat de la technique

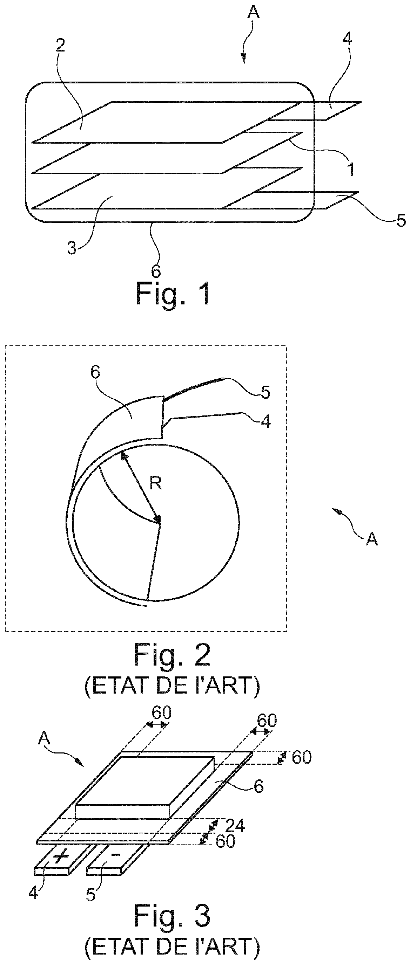

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité à l'eau, l'oxygène et l'azote, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode lors du processus de charge et inversement lors du processus de décharge, ce qui génère dans ce dernier cas le courant, par déplacement d'électrons dans le circuit extérieur. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Une électrode négative d'un accumulateur lithium-ion peut être formée d'un seul alliage, ou d'un mélange d'alliages, ou d'un mélange d'alliage(s) et d'autres matériau(x) d'insertion du lithium (le graphite, sous forme synthétique ou naturel, Li₄Ti₅O₁₂, TiO₂....), éventuellement également à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement entre 3 et 4,1 Volt.

Selon le type d'application visée, on cherche à réaliser soit un accumulateur rigide, soit un accumulateur fin et flexible: l'emballage est alors respectivement soit rigide et constitue en quelque sorte un boitier et soit souple.

Les emballages rigides (boitiers) sont utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial. Le matériau constitutif d'un boitier d'accumulateur Li-ion est usuellement métallique, typiquement un alliage d'aluminium ou en acier inoxydable ou en polymère rigide comme par exemple l'acrylonitrile butadiène styrène (ABS).

Les emballages souples sont usuellement fabriqués à partir d'un matériau composite multicouche constitué d'un empilement de couches d'aluminium recouvertes par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N° ADR-0N25/AL40/CPP80.

La demanderesse a également proposé dans la demande de brevet FR 2955974 un emballage souple amélioré à partir d'une ou plusieurs feuilles en polyarylethercetone (PAEK).

Un accumulateur souple, communément appelé en anglais «*Thin Film Battery»,* est le plus souvent constitué d'une seule cellule électrochimique.

L'épaisseur totale de l'accumulateur avec son emballage souple est généralement inférieure à 0,6 mm, ce qui permet de le plier selon un rayon de courbure compris entre 20 et 30 mm, qui est fonction des dimensions et de la chimie des matériaux d'électrodes, et ce sans altérer les performances lors du fonctionnement de l'accumulateur.

On a représenté en figure 2, un tel accumulateur A dans une configuration pliée, le rayon de courbure R étant symbolisé.

Pour augmenter la capacité d'un accumulateur, il est usuel d'empiler plusieurs cellules électrochimiques. Or, par définition, plus on empile de cellules, plus on augmente l'épaisseur et donc on réduit potentiellement la souplesse de l'accumulateur qui en résulte.

Avec les matériaux d'électrodes ainsi que ceux des séparateurs usuels, la limite de flexion d'un accumulateur à empilement est estimée lorsqu'il présente une épaisseur comprise entre 1,5 et 2 mm.

Typiquement, avec une épaisseur de 1,5 mm, un accumulateur à empilement cellules peut être courbé selon un rayon de courbure relativement grand, compris entre 100 et 500 mm. Au-delà, à partir de 2 mm, l'accumulateur est totalement rigide.

Ainsi, usuellement pour augmenter la capacité d'un accumulateur tout en s'assurant qu'il conserve une certaine souplesse, on augmente la surface des électrodes.

Or, dans certaines applications la place allouée à l'accumulateur (batterie) est très restreinte et la solution immédiate d'augmentation des surfaces d'électrodes ne peut convenir.

Ainsi, pour augmenter la capacité d'un accumulateur ou d'une batterie tout en lui permettant de rester compact et d'être souple en vue de sa conformabilité, il a déjà été envisagé de nouvelles conceptions d'architecture de l'accumulateur ou de la batterie.

Dans la littérature, on trouve ainsi plusieurs demandes de brevet/brevets qui protègent des solutions de nouvelles architectures d'accumulateur/batterie.

La demande de brevet WO 2013/101316 divulgue une solution d'architecture selon laquelle des zones de jonctions souples sont créées entre différents accumulateurs d'une même batterie, chaque accumulateur étant rigide car constitué d'un empilement de plusieurs cellules électrochimiques. On pourra se reporter en particulier à la figure 3 de cette demande où les jonctions souples sont clairement montrées. Avec l'architecture proposée, la batterie présente une forte capacité apportée par le nombre important de cellules et bénéficie d'une certaine souplesse lui permettant une conformabilité grâce aux zones de jonction souples. Par ailleurs, les accumulateurs à empilement de cellules sont reliés entre eux par les connectiques et un emballage souple est commun à tous les accumulateurs.

On peut citer également les demandes de brevet/brevets, WO 00/41252, WO 2008/023199, US5693105, WO 2015/100762 A1 ou encore US6528204. Les solutions proposées dans ces documents consistent à proposer des architectures avec des agencements entre cellules électrochimiques qui permettent de générer des zones de jonction flexibles.

En particulier, le brevet US5693105 propose une architecture d'un accumulateur constitué de plusieurs cellules électrochimiques reliées entre elles par un même séparateur en polymère, qui est continu et par des collecteurs de courant communs à deux cellules adjacentes, ce qui confère à l'accumulateur une certaine souplesse au niveau des jonctions formées par le séparateur continu et les collecteurs de courant. Le principal inconvénient de cette architecture est la mauvaise étanchéité entre les cellules. Le séparateur étant poreux ou conducteur d'ions lithiums, l'électrolyte peut naviguer entre les différentes cellules et créer ainsi des ponts ioniques. Ces ponts ioniques provoquent la chute des performances électrochimiques.

On a représenté en figure 3, un accumulateur A à empilement de cellules électrochimiques, l'empilement étant logé dans un emballage souple 6. Comme montré sur cette figure 3, pour assurer l'étanchéité de cet emballage souple 6, il est nécessaire de procéder au scellage selon quatre bandes de scellage 60, généralement de 5 mm de largeur unitaire. Ces bandes 60 forment au final des rebords. Et, lorsque ces rebords ne peuvent pas être repliés sur le côté de l'accumulateur selon son épaisseur, ce qui est le cas pour épaisseur d'empilement inférieure à 5mm, ils constituent une perte de surface active et donc en capacité surfacique de l'accumulateur.

On peut toujours envisager le pliage des rebords sous l'empilement de l'accumulateur, c'est-à-dire sur sa surface, mais cela revient à rigidifie ce dernier.

Dans le cas d'un assemblage de plusieurs de ces accumulateurs entre eux, reliés entre eux par des connectiques externes, la perte de surface peut être conséquente car le nombre de bandes de scellage est multiplié proportionnellement au nombre d'accumulateurs assemblés.

En outre, dans un accumulateur à empilement de cellules électrochimiques, les substrats sur lesquels sont déposés les matériaux actifs d'électrode et qui forment chacun un collecteur de courant d'une électrode de même polarité sont connectés entre eux par soudure. Usuellement, le soudage est réalisé par ultrasons.

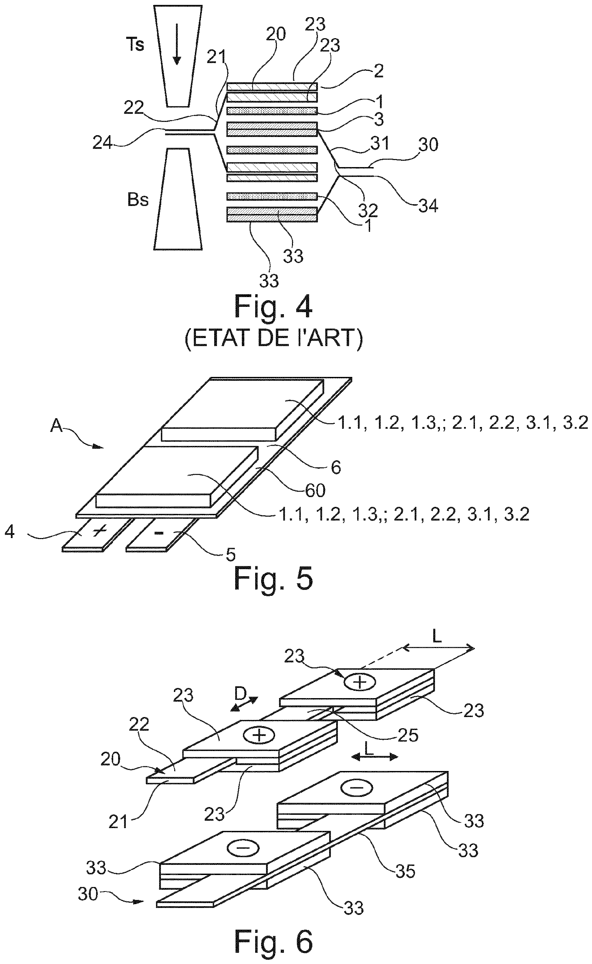

On a représenté schématiquement en figure 4, un exemple de procédé de soudage entre collecteurs de courant 20 des électrodes positives 2. Comme on peut le voir sur cette figure 4, chaque électrode positive 2 est constituée d'un substrat en matériau électriquement conducteur 20 supportant sur chacune de ces faces 21, 22 un même motif de matériau actif 23. Il en va de même avec l'électrode négative 3 avec son substrat électriquement conducteur 30 supportant sur chacune den ces faces 31, 32 un même motif de matériau actif 33.

Une fois l'empilement réalisé avec intercalage d'un séparateur 1 entre une électrode positive 2 et une électrode négative 3, on réalise sur au moins un des côtés de l'empilement une soudure entre les collecteurs de courant positifs 20 d'une part et entre ceux négatifs 30 d'autre part, en les mettant en appui l'un contre l'autre et en les insérant ainsi entre une tête de soudure à ultrasons (sonde) Ts et un bloc de soudure Bs prévu à cet effet.

Pour permettre une soudure efficace sur une bande suffisante 24 ou 34, les collecteurs de courant 20 ou 30 doivent chacun dépasser du motif d'électrode 23 ou 33 d'une distance de préférence supérieure à 5 mm. Autrement dit, il est nécessaire de dédier à la soudure une bande 24 ou 34, généralement de 5 mm de largeur, sur au moins un des côtés de l'empilement de l'accumulateur A, ce qui constitue donc également une perte en capacité surfacique.

US 2015/026970 A1 divulgue un accumulateur électrochimique emballé dans un emballage souple, formé en laminant une anode, un séparateur et une cathode, chacune des électrodes étant formées d'un substrat conducteur ayant des parties de même section que le matériau actif (placé de part et d'autre du substrat), et d'autres parties plus fines, qui correspondent aux lignes de pliage de l'enroulement des électrodes.

CN 104 466 229 A divulgue un accumulateur comprenant plusieurs motifs d'électrode étalés sur deux dimensions pour assurer un accumulateur souple.

Il existe donc un besoin d'améliorer les architectures d'accumulateurs au lithium, et plus généralement métal-ion, notamment afin d'augmenter leur capacité tout en leur conférant des caractéristiques de souplesse en vue de leur assurer une conformabilité, et ce sans que cela se fasse au détriment de leur compacité.

Le but général de l'invention est de répondre au moins en partie à ce besoin.

### Exposé de l'invention

Pour ce faire, l'invention a pour objet un accumulateur électrochimique selon la revendication 1.

Il faut comprendre ici et dans le cadre de l'invention que les motifs d'électrode du ou des substrats d'une polarité donnée sont alignés ou encore isométriques et superposés avec les motifs d'électrode du ou des substrats de la polarité opposée, dans la direction de l'empilement.

Ainsi, selon l'invention, on réalise une architecture avec des zones dépourvues de matériaux d'électrode, rigides en eux-mêmes et de préférence également dépourvues de matériau du séparateur. Les lignes de pliage permettent une flexibilité importante de l'accumulateur par déformation élastique de l'emballage souple, des substrats collecteurs de courant et le cas échéant du séparateur et ce selon plusieurs configurations possibles à partir d'une même géométrie de base.

Autrement dit, ce sont les constituants mêmes d'un accumulateur selon l'invention qui disposent à la fois de zones rigides et de zones souples. Les motifs d'électrode constituent les zones rigides de l'accumulateur et les zones souples sont constituées uniquement des substrats collecteurs de courant et des films de séparateur.

En outre, comparativement aux architectures d'accumulateurs à emballage souple selon l'état de l'art, on réduit le nombre de bandes de matière nécessaires d'une part au thermo scellage de l'emballage souple et d'autre part aux soudages des substrats de même polarité entre eux. On augmente ainsi la capacité de l'accumulateur, on réduit le nombre de soudures à deux et on augmente la souplesse conférée à l'accumulateur.

Selon un mode de réalisation avantageux, l'accumulateur comprend en outre :
- deux substrats d'extrémité de l'empilement, constitués par un troisième et un quatrième substrat électriquement conducteur formant collecteur de courant comprenant chacun deux faces principales dont l'une supporte au moins deux motifs de matériau actif et l'autre face est dépourvue de matériau actif d'électrode en définissant une électrode d'extrémité, les deux motifs étant distants l'un de l'autre en définissant une zone dépourvue de motifs;
- deux films de séparateur isolant électriquement dont l'un est agencé en contact avec chacun des motifs d'électrode supportés par l'une des faces du premier substrat et ceux du quatrième substrat et l'autre est agencé en contact avec chacun des motifs d'électrode supportés par l'une des faces du deuxième substrat et ceux de la première face du troisième substrat;
dans lequel :
- les motifs d'électrode du troisième substrat sont de même polarité que ceux du premier substrat tandis que ceux du quatrième substrat sont de même polarité que ceux du deuxième substrat ;
- les motifs d'électrode du troisième et quatrième substrat sont isométriques et superposés avec ceux du premier et du deuxième substrat dans la direction de l'empilement;
- le troisième substrat est soudé au(x) premier(s) substrat(s) à au moins un point de leurs zones dépourvues de motifs d'électrode tandis que le quatrième substrat est soudé au(x) deuxième(s) substrat(s) à au moins un point de leurs zones dépourvues de motifs d'électrode ;
- les substrats sont de même section que les motifs dans les zones de ses faces qui les supportent, tandis qu'ils sont de section moindre dans les zones dépourvues de motifs, les zones dépourvues de motifs comportant des découpes créant des zones sans matière entre deux motifs adjacents sur une même face d'un substrat.

Selon un premier mode de réalisation, les motifs d'électrode peuvent être de section carrée ou rectangulaire.

Ainsi, selon l'invention, les zones ne supportant pas les motifs d'électrode d'un substrat collecteur de courant sont découpées avec une forme au juste de ce qui est nécessaire pour réaliser la continuité électrique et pour obtenir une résistance mécanique au pliage suffisante. En ajustant par découpe les zones non actives des substrats collecteurs de courant, on augmente la flexibilité de l'accumulateur.

En outre, en supprimant de la matière de substrats, on peut créer des zones libres pour pouvoir connecter l'ensemble des substrats supportant des motifs d'électrode de même polarité par un point de soudure. Les motifs d'électrode de même polarité sont donc tous reliés en parallèle électrique.

Autrement dit, ces zones sans matière ou zones libres sont dimensionnées pour augmenter encore la flexibilité de l'accumulateur et avantageusement pour certaines pour pouvoir connecter l'ensemble des substrats supportant des motifs d'électrode de même polarité par un point de soudure.

Selon une variante de réalisation, les substrats supportent sur une face principale, au moins trois motifs d'électrode isométriques et superposés.

Selon une autre variante, les substrats supportent sur une face principale, quatre motifs d'électrode agencés en carré ou en rectangle, les premier et troisième substrats étant en forme de U dans leurs parties reliant les motifs d'électrode entre eux tandis que les deuxième et quatrième substrats sont en forme de I dans leurs parties reliant les motifs d'électrode entre eux.

Selon un deuxième mode de réalisation, les substrats sont de section circulaire, les motifs d'électrode d'un substrat étant de section en portion de cercle agencés selon un cercle concentrique à celui des substrats.

Selon un troisième mode de réalisation, les substrats sont de section de polygone régulier, les motifs d'électrode d'un substrat étant de section triangulaire agencés selon un polygone homothétique à celui du substrat.

Selon un quatrième mode de réalisation, les substrats sont de section oblongue, chaque substrat comprenant sur au moins un de ses faces principales deux motifs d'électrode chacun de section semi-oblongue agencés en regard l'un de l'autre selon une section oblongue homothétique à celle du substrat.

Les substrats collecteurs de courant sont de préférence des feuillards métalliques, avec une épaisseur préférentielle comprise entre 5 et 50 µm. Pour un feuillard d'anode, il peut s'agir avantageusement d'un feuillard en cuivre d'épaisseur de l'ordre de 12 µm. Pour un feuillard de cathode, il peut s'agir avantageusement d'un feuillard en aluminium d'épaisseur de l'ordre de 20 µm.

Les motifs d'électrode sont de préférence réalisés par technique d'impression, de préférence encore par sérigraphie sur les substrats collecteurs de courant. D'autres techniques d'impression peuvent être employées telles que la flexographie, l'héliogravure, le spray, le jet d'encre, l'impression par jet d'aérosol... Un avantage important des techniques d'impression est de pouvoir fabriquer des motifs de section variées (carrée, rectangulaire, ronde ou plus complexe) et donc permet d'acquérir une certaine liberté sur le design de l'accumulateur selon l'invention. La sérigraphie peut être privilégiée car elle présente l'avantage de pouvoir déposer une plus grande quantité d'encre en un seul passage, ce qui permet d'obtenir de forts grammages et donc des capacités élevées. De même les cadences de production sont élevées, comparativement à l'enduction qui est le procédé conventionnel utilisé chez les industriels de la batterie, typiquement une vitesse d'impression de 20 à 25 m/s pour la sérigraphie à comparer à une vitesse 10 à 15 m/s pour l'enduction.

Les connexions ou pôles qui émergent de l'emballage souple, pour le branchement de l'accumulateur à un circuit extérieur peuvent être donc constituées soit de bandes des substrats collecteur de courant en lui-même, de préférence en aluminium pour l'électrode positive et en cuivre pour l'électrode négative, soit de languettes métalliques soudées l'une aux substrats supportant les motifs d'électrode positive l'autre à ceux supportant les motifs d'électrode négative, de préférence également en aluminium pour l'électrode positive et en nickel pour l'électrode négative. Avantageusement, afin de garantir l'étanchéité de l'accumulateur, quelle que soit la forme retenue pour les pôles, une couche polymère thermo fusible choisie de préférence parmi un polyéthylène (PE) ou un polypropylène (PP), est ajoutée entre le ou les films d'emballage souple et les pôles.

L'emballage souple est de préférence constitué d'un sachet souple unique. Il peut être fabriqué à partir d'un matériau composite multicouche constitué d'un empilement de couches d'aluminium recouvertes par un ou plusieurs film(s) en polymère laminés par collage. Le polymère recouvrant l'aluminium peut être choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80. Ainsi, le sachet souple conforme à l'invention est avantageusement à base d'un film multicouches aluminisé, étanche à l'électrolyte. Afin de procéder au scellement du sachet souple par thermo scellage, on peut tout d'abord sceller thermiquement trois côtés du sachet tout en laissant ouvert le quatrième côté pour l'activation de l'accumulateur par remplissage de l'électrolyte puis, une fois ce remplissage effectué, on scelle thermiquement le quatrième côté.

L'accumulateur selon l'invention peut être un accumulateur Li-ion, les motifs d'électrode étant en matériau d'insertion du lithium.

En fonction du type de matériaux d'électrode d'insertion au lithium choisi, les substrats collecteurs de courant peuvent être formés par au moins une feuille métallique de préférence en cuivre ou en aluminium ou métallisée en surface d'un autre métal, par exemple en aluminium superposé à du cuivre.

Par « électrode en matériau d'insertion au Lithium », on entend ici et dans le cadre de l'invention, un motif d'électrode comportant au moins un matériau d'insertion au lithium et au moins un liant en polymère. Eventuellement, le motif d'électrode peut comprendre en plus un conducteur électronique, par exemple des fibres de carbone ou du noir de carbone.

Par « matériau d'insertion au lithium », en particulier pour les motifs d'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour les motifs d'électrode négative, on entend également un matériau choisi parmi: oxyde de titane lithié ou non, par exemple Li₄Ti₅O₁₂ ou TiO₂. Plus particulièrement, le matériau des motifs d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en graphite et les cathodes en LiFePO₄.

Par « séparateur », on entend ici et dans le cadre de l'invention, un isolant électrique, conducteur ionique formé par au moins un matériau polymère. Chaque film de séparateur est découpé selon le motif souhaité par un procédé mécanique ou par laser.

Le séparateur peut être mis en œuvre directement sur les motifs d'électrode (positive ou négative) par impression, de préférence sérigraphie, à partir d'une solution polymère. Les avantages de cette technique sont :
- d'améliorer l'interface électrode-constituant électrolytique ce qui permet d'améliorer les performances électrochimiques,
- de recouvrir uniquement les zones de matériau actif qui sont essentielles et ainsi limiter les pertes en matières premières,
- de permettre une réduction du coût de matière première.

Selon cette variante, le séparateur peut être choisi parmi les polymères suivants :
- le polyfluorure de vinylidène (PVdF) ou dérivés, le polyacétate de vinyle (PVA), le polyméthacrylate de méthyle (PMMA), le polyoxyéthylène (POE) ou dérivés, le polyéthylène téréphtalate (PET), les polyacryliques ou dérivés, les polyoléfines tels le polypropylène, le polyéthylène, la cellulose ;
- les copolymères de type PVdF-HFP (hexafluoropropylène), PVdF-POE... ;
- les ionomères conducteurs de cations ou polymères cristallins conducteurs de cations ;
- les polymères sensibles thermiquement ou photosensibles qui réticulent sous l'action de la chaleur ou d'un rayonnement UV,
- les monomères polymérisables sous UV ou par voie thermique, porteurs ou non d'une charge ionique à base d'un sel de lithium, comme par exemple les PolyHIPE.

Le polymère est mis en solution dans un solvant, ou dans un mélange solvant / non-solvant dans le cas d'un procédé d'inversion de phase.

La solution de polymère est déposée sur les motifs d'électrode sous forme d'une fine couche puis le solvant est évaporé par passage de l'électrode dans un four en continue ou en statique. Selon le polymère et le procédé de mise en œuvre utilisé, la fine couche du composant électrolytique peut être poreuse, dense ou gélifiée en présence de l'électrolyte. L'épaisseur de la couche polymère est de préférence comprise entre 5 et 40 µm.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le dépôt de chaque motif d'électrode sur un substrat formant un collecteur de courant peut être réalisé par une technique d'impression usuelle telle que sérigraphie, héliographie, flexographie, spray,....

De préférence, la surface de chaque motif d'électrode négative est supérieure à la surface de chaque motif d'électrode positive. On s'assure ainsi que tous les ions métal du matériau d'insertion positif, tels que les ions Li⁺ dans un accumulateur au lithium, puissent venir migrer vers l'électrode négative et ainsi s'intercaler dans la structure. Outre l'alignement des motifs d'électrode positive avec ceux de l'électrode négative, on peut également augmenter la surface des motifs d'électrode négative comparativement à ceux d'électrode positive. Cela peut correspondre à une bande de matériau actif, rajoutée sur chaque côté de chaque motif d'électrode négative. Une bande rajoutée peut typiquement avoir une largeur de 1mm.

Les avantages de l'architecture de l'accumulateur selon l'invention comparativement aux architectures selon l'état de l'art sont nombreux parmi lesquels on peut citer :
- un gain en capacité : en effet, le nombre de bandes nécessaires au scellage de l'emballage souple et aux soudures des substrats collecteurs de courant, est réduit comparativement à une architecture classique constituée d'accumulateurs unitaires reliés entre eux par des connexions ou jonctions souples. Ce gain en capacité surfacique se traduit par une augmentation de la densité d'énergie volumique de l'accumulateur;
- une facilité de conception : à même capacité, un seul élément à empiler au lieu de deux voire plus selon le nombre d'accumulateurs selon l'état de l'art, avec seulement deux points de soudures à réaliser l'un pour les substrats supportant les motifs d'électrode positive l'autre pour ceux supportant les motifs d'électrode négative. On évite ainsi, des soudures qui deviennent très compliquées à réaliser lorsque le nombre d'accumulateurs à connecter est supérieur à deux ;
- une souplesse améliorée: en plus de la souplesse intrinsèque apportée par les lignes de pliage, le nombre de bandes de scellage et de points de soudure est réduit par rapport à l'art antérieur, ce qui augmente donc la souplesse de l'accumulateur..

Les applications visées pour l'accumulateur selon l'invention sont nombreuses.

L'invention concerne ainsi plus particulièrement l'utilisation pour alimenter électriquement une électrode souple de stimulation transdermique, l'accumulateur étant intégré dans l'enveloppe de l'électrode.

Il peut s'agir avantageusement de l'électrode décrite dans la demande de brevet WO2015/17767A1 au nom du déposant.

Une autre utilisation plus générale de l'accumulateur est pour alimenter électriquement tout dispositif électronique apte à se déformer afin d'être conformé avec un emplacement à contrainte de formes et/ou d'espace.

Il peut s'agir de capteurs ou antennes de type RFID (de l'anglais « Radio Frequency Identification ») destinés à être implantés logés dans l'habitacle d'un véhicule automobile, ou dans le moindre recoin disponible du véhicule, pour la communication d'informations.

Il peut s'agir également d'appareils portables de type téléphones portables, de formes incurvées ou autres dans lesquels il apparaît impératif que l'accumulateur épouse la forme de l'appareil...

Un accumulateur selon l'invention vise également le domaine de l'électronique flexible avec des applications telles que les capteurs pour vêtements intelligents, les écrans de type flexible, les papiers électroniques, etc...où l'objet final est soumis à des contraintes de déformations répétées.

### Description détaillée

D'autres avantages et caractéristiques ressortiront mieux à la lecture de la description détaillée, faite à titre illustratif en référence aux figures suivantes parmi lesquelles :
- la figure 1 est une vue schématique en perspective éclatée montrant les différents éléments d'un accumulateur lithium-ion;
- la figure 2 est une vue photographique en perspective montrant un accumulateur lithium-ion avec son emballage souple selon l'état de l'art, dans sa configuration incurvée maximale;
- la figure 3 est une vue en perspective montrant l'extérieur d'un accumulateur lithium-ion avec son emballage souple selon l'état de l'art, avec les bandes de scellage nécessaires au scellage de l'emballe souple et une bande de soudure nécessaire au soudage des collecteurs de courant;
- la figure 4 est une vue schématique de côté montrant une étape de soudage de collecteurs de courant d'un accumulateur li-ion à empilement selon l'état de l'art ;
- la figure 5 est une vue en perspective montrant l'extérieur d'un accumulateur lithium-ion à empilement avec son emballage souple selon un premier exemple de réalisation de l'invention;
- la figure 6 est une vue en perspective montrant les substrats supportant sur chacune de leurs faces les motifs d'électrode, qui sont constitutifs de l'accumulateur selon la figure 5;
- la figure 7 est une vue en perspective et en éclaté d'un empilement de l'ensemble des éléments constitutifs de l'accumulateur selon la figure 5;
- la figure 8 est une vue schématique en perspective montrant la réalisation par sérigraphie d'un motif d'électrode sur un substrat électriquement conducteur conforme à l'invention;
- la figure 9 une vue en perspective montrant l'extérieur d'un accumulateur lithium-ion à empilement avec son emballage souple selon un deuxième exemple de réalisation de l'invention;
- la figure 10 est une vue en perspective et en éclaté d'un empilement de l'ensemble des éléments constitutifs de l'accumulateur selon la figure 9;
- la figure 11 est une vue de face de l'accumulateur selon la figure 9;
- les figures 12A et 12B sont des vues respectivement de face et de côté d'un substrat supportant sur une seule de ses faces deux motifs d'électrode positive, le substrat constituant une extrémité de l'empilement de l'accumulateur selon la figure 9;
- les figures 13A et 13B sont des vues respectivement de face et de côté d'un substrat supportant sur une seule de ses faces deux motifs d'électrode négative, le substrat constituant une extrémité de l'empilement de l'accumulateur selon la figure 9;
- les figures 14A et 14B sont des vues respectivement de face et de côté d'un substrat supportant sur chacune de ses faces deux motifs d'électrode positive, le substrat constituant une partie centrale de l'empilement de l'accumulateur selon la figure 9;
- les figures 15A et 15B sont des vues respectivement de face et de côté d'un substrat supportant sur chacune de ses faces deux motifs d'électrode positive, le substrat constituant une partie centrale de l'empilement de l'accumulateur selon la figure 9;
- la figure 16 est vue de face d'un film séparateur isolant électrique, pour l'empilement de l'accumulateur selon la figure 9;
- la figure 17 illustre sous forme de courbes la capacité spécifique d'un accumulateur li-ion réalisé selon le premier exemple de l'invention ;
- la figure 18 est une vue de face montrant l'extérieur d'un accumulateur lithium-ion à empilement avec son emballage souple selon un troisième exemple de réalisation de l'invention;
- les figures 19A et 19B sont des vues respectivement de face et de côté d'un substrat supportant sur une seule de ses faces deux motifs d'électrode positive, le substrat constituant une extrémité de l'empilement de l'accumulateur selon la figure 18;
- les figures 20A et 20B sont des vues respectivement de face et de côté d'un substrat supportant sur une seule de ses faces deux motifs d'électrode négative, le substrat constituant une extrémité de l'empilement de l'accumulateur selon la figure 18;
- les figures 21A et 21B sont des vues respectivement de face et de côté d'un substrat supportant sur chacune de ses faces deux motifs d'électrode positive, le substrat constituant une partie centrale de l'empilement de l'accumulateur selon la figure 18;
- les figures 22A et 22B sont des vues respectivement de face et de côté d'un substrat supportant sur chacune de ses faces deux motifs d'électrode positive, le substrat constituant une partie centrale de l'empilement de l'accumulateur selon la figure 8;
- la figure 23 est une vue de face d'un film séparateur isolant électrique, pour l'empilement de l'accumulateur selon la figure 18;
- la figure 24 est une vue de face montrant l'extérieur d'un accumulateur lithium-ion à empilement avec son emballage souple selon un quatrième exemple de réalisation de l'invention;
- la figure 25 est une vue de face montrant l'extérieur d'un accumulateur lithium-ion à empilement avec son emballage souple selon un cinquième exemple de réalisation de l'invention;
- la figure 26 est une vue de face montrant l'extérieur d'un accumulateur lithium-ion à empilement avec son emballage souple selon un sixième exemple de réalisation de l'invention.

Par souci de clarté, les mêmes références désignant les mêmes éléments d'un accumulateur selon l'état de l'art et d'un accumulateur selon l'invention sont utilisées pour toutes les figures 1 à 26.

On précise que les différents éléments selon l'invention sont représentés uniquement par souci de clarté et qu'ils ne sont pas à l'échelle.

Les figures 1 à 4 ont déjà été commentées en préambule. Elles ne seront donc pas détaillées ci-après.

L'invention est décrite ci-après en référence à six exemples de réalisation différents d'un accumulateur Li-ion souple et de forte capacité obtenue par l'empilement de plusieurs motifs d'électrode.

Quel que soit l'exemple de réalisation, l'accumulateur Li-ion selon l'invention comprend un empilement au moins d'un premier 20 et d'au moins un deuxième 30 substrat électriquement conducteur formant collecteur de courant.

Pour chacun de ces substrats 20, 30, chacun des deux faces principales 21, 22 ; 31, 32, supporte au moins deux motifs de matériau actif d'électrode 23 ; 33. Les deux motifs 23 ; 33 de chacune des faces 21, 22 ; 31, 32 sont distants l'un de l'autre en définissant une zone 25 ; 35 dépourvue de motifs. Chaque motif 23 ; 33 de l'une des faces 21 ; 31 d'un substrat 20 ; 30 est supporté dans une même zone qu'un motif 23 ; 33 de l'autre face 22 ; 32 du même substrat 20 ; 30.

Un film 1.1 de séparateur isolant électriquement intégrant un électrolyte, est agencée en contact avec chacun des motifs d'électrode 23 ; 33 supportés par l'une des faces du premier 20 et du deuxième 30 substrat.

Un emballage souple 6 est agencé pour contenir le premier 20 et le deuxième 30 substrats et le film séparateur 1, avec étanchéité tout en étant traversé par un premier 4 et un deuxième 5 pôles de l'accumulateur respectivement reliés ou constitués par une partie du premier 20 ou du deuxième 30 substrat.

Les motifs d'électrode 23 du premier substrat 20 sont de même polarité positive et constituent donc ensemble avec le substrat 20, une première électrode positive 2.1. Ceux 33 du deuxième substrat 30 sont de polarité négative et constituent avec le substrat 30 une première électrode négative 3.1.

Le cas échéant, l'accumulateur selon l'invention peut comprendre à chacune des extrémités de l'empilement une autre électrode positive 2.2 et une autre électrode négative 3.2.

Ainsi, chacune de ces électrodes d'extrémité 2.2 ; 3.2 est constituée par un substrat électriquement conducteur formant collecteur de courant comprenant chacun deux faces principales dont l'une 20, 30 supporte au moins deux motifs de matériau actif d'électrode 23 ; 33 et l'autre face est dépourvue de matériau actif, les deux motifs étant distants l'un de l'autre en définissant une zone 25 ; 35 dépourvue de motifs.

Dans ce cas, un film supplémentaire de séparateur 1.3 sépare l'électrode positive 2.2 d'extrémité de l'électrode négative 3.1 centrale et un autre film supplémentaire 1.2 sépare l'électrode négative 3.2 d'extrémité de l'électrode positive 2.1 centrale.

Dans tous les exemples, les zones 25 ; 35 dépourvues de motifs sont flexibles et définissent ainsi des axes ou lignes de pliage de l'accumulateur.

Dans tous les exemples, les motifs 33 d'électrode négative sont alignés avec les motifs 23 d'électrode positive.

Dans tous les exemples, la surface de chaque motif 33 d'électrode négative est supérieure à la surface de chaque motif 23 d'électrode positive.

Dans chacun des exemples 1 à 6, l'accumulateur comprend deux connectiques de sortie dont un pôle positif 4 et un négatif 5.

L'architecture d'accumulateur selon l'invention permet de réduire le nombre de bandes dédiées au scellage de l'emballage souple et aux soudures des collecteurs de courant, ce qui apporte un gain en capacité surfacique et donc en densité d'énergie volumique de l'accumulateur.

### Exemple 1:

Dans cet exemple 1 illustré aux figures 5 à 7, l'accumulateur A comprend dans sa partie centrale de l'empilement une électrode positive 2.1 et une électrode négative 3.1, et à chacune des extrémités de l'empilement une électrode positive 2.2 et une électrode négative 3.2.

Les électrodes centrales 2.1 ; 3.1 comprennent deux motifs de matériau actif 23 ; 33, sur chacune des faces 21, 22 ; 31, 32 des collecteurs de courant 20 ; 30.

Les électrodes d'extrémité 2.2 ; 3.2 comprennent quant à elles deux motifs de matériau actif 23 ; 33, sur une seule des faces 21 ; 31 des collecteurs de courant 20 ; 30.

La distance D définissant une zone nue 25 ; 35 entre les deux motifs 23 ; 33 des électrodes positive 2.1, 2.2 et des électrodes négatives 3.1, 3.2 d'une même face est de préférence supérieure ou égal à 5 mm pour laisser suffisamment d'espace afin de constituer un axe ou ligne de pliage dans cette zone 25 ; 35.

La largeur L du substrat collecteur 20 ; 30 découpé est de préférence inférieure à 2/3 de la largeur du motif d'électrode 23 ; 33 afin de ne pas fragiliser les électrodes 2.1, 2.2 ; 3.1, 3.2, c'est-à-dire pour leur conférer une résistance suffisante à la déchirure.

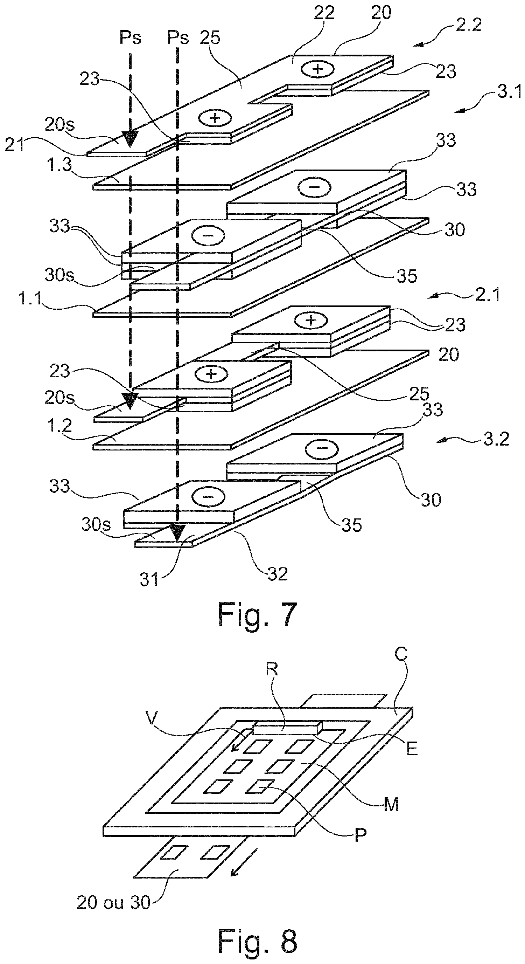

La découpe des substrats 20, 30 permet de réaliser une soudure entre eux afin de constituer les sorties ou pôles 4, 5 de l'accumulateur, en seulement deux points Ps comme montré en figure 7.

Comparativement à une batterie selon l'état de l'art, à deux accumulateurs connectés en parallèle comme montré en figure 3, l'accumulateur selon cet exemple 1 ne nécessite que la mise en place de cinq bandes de scellage 60 au lieu de huit et d'une seule bande de soudure 24 au lieu de deux. Cela apporte donc un gain en capacité surfacique et donc en densité d'énergie volumique pour l'accumulateur selon l'invention.

On a illustré en figure 8 un exemple d'impression par sérigraphie des motifs d'électrode 23 ou 33 à partir d'un écran d'impression M de type pochoir comportant des ouvertures P, réalisée sur un substrat collecteur 20 ou 30.

Un cordon d'encre E est déposé directement sur l'écran M qui est supporté par un cadre C. Le cordon d'encre E est ensuite poussé par la racle R suivant une vitesse réglable symbolisée par la flèche V.

La quantité d'encre déposée, reliée au grammage et donc à la capacité de l'électrode, est réglée par l'épaisseur de l'écran d'impression M et par les dimensions des ouvertures P.

La pression appliquée sur la racle R est également réglable, ce qui permet d'ajuster plus finement le grammage de l'électrode.

L'encre E d'électrode déposée sur le collecteur de courant 20 ou 30 par cette technique de sérigraphie est ensuite séchée par passage de l'électrode 2 ou 3 dans un four en continu ou en statique dans une étuve ventilée.

Les électrodes 2 ou 3 sont ensuite calandrées à une épaisseur et/ou une porosité calibrée(s) puis découpées selon le motif choisi 23 ou 33 par procédé mécanique ou par laser.

### Exemple 2 :

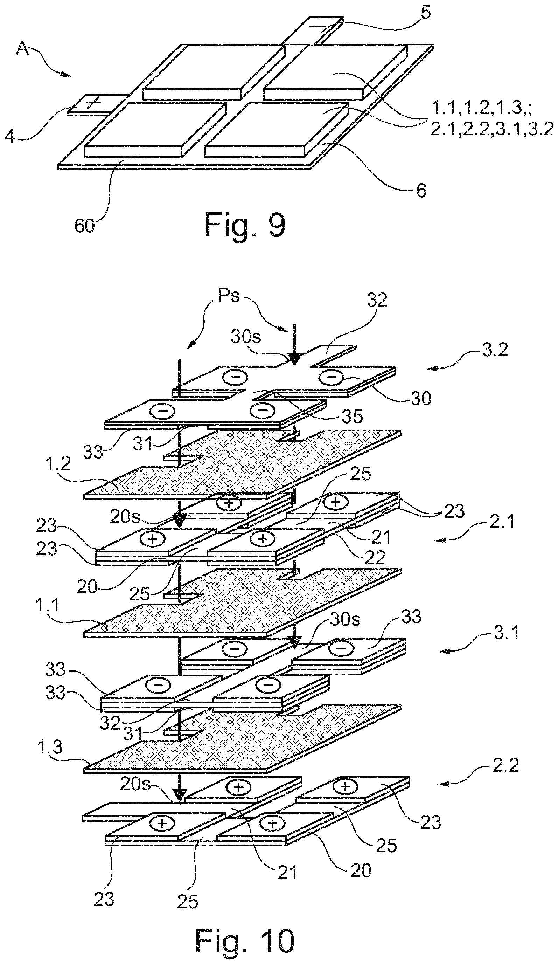

Cet exemple 2 illustré aux figures 9 à 16 a fait l'objet d'un prototype conçu pour alimenter en électricité une électrode transdermique pour l'électrostimulation.

Ici, les électrodes centrales positive 2.1 et négative 3.1 comprennent chacune huit motifs d'électrode 23 ; 33, c'est-à-dire quatre par face 21, 22 ; 31, 32 de collecteurs de courant 20 ; 30.

Les électrodes d'extrémité positive 2.2 et négative 3.2 comprennent chacune quatre motifs d'électrode 23 ; 33 sur une seule des faces 21 ; 31 des collecteurs de courant 20 ; 30.

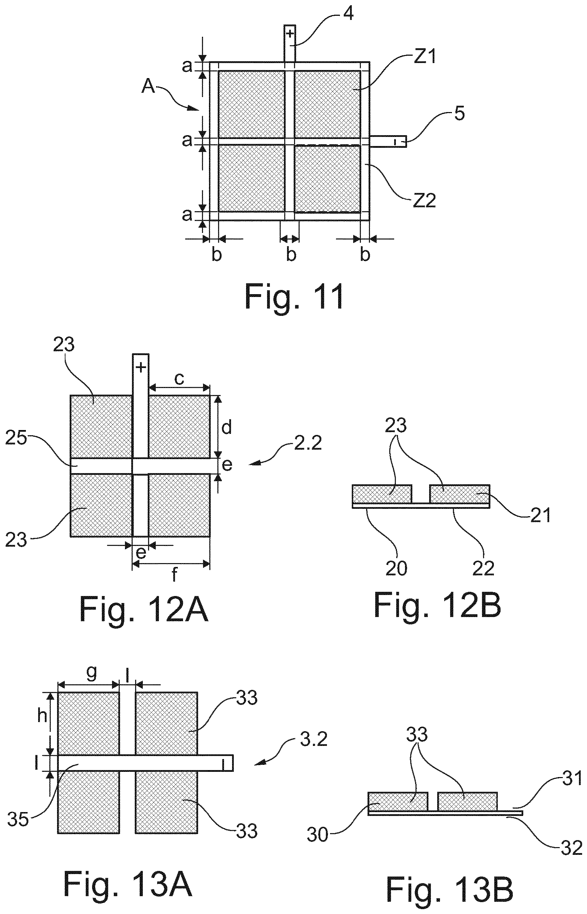

En vue de dessus de la figure 11, on distingue quatre zones identique Z1 occupées par les motifs d'électrodes 23 ; 33 empilés les uns sur les autres et les zones Z2 qui en sont dépourvues et sont donc occupées uniquement par les parties des substrats collecteurs de courant nues 25, 35 et les films de séparateur 1.1, 1.2, 1.3. Les zones Z1 sont donc moins flexibles que les zones Z2. Comme délimité par les pointillés en figure 11, l'accumulateur comprend un nombre de six zones flexibles Z2.

A titre indicatif, dans cet exemple 2, trois zones flexibles Z2 ont une longueur égale à environ 53 mm et une largeur égale à a = 5 mm et trois autres zones flexibles Z2 ont une longueur égale à 55 mm et de largeur égale à b = 5 mm.

Comme montré aux figures 12A et 12B, l'électrode positive d'extrémité 2.2 comprend quatre motifs d'électrode 23 reliés entre eux par un unique substrat collecteur de courant 20. Les quatre motifs 23 sont situés sur la même face 21 du collecteur.

A titre indicatif, dans cet exemple 2, les quatre motifs d'électrode 23 sont de forme rectangulaire et ont chacun pour largeur c = 15 mm et longueur d = 16 mm. La distance e entre deux motifs 23 adjacents est de 9 mm. La zone 20s constitue la zone de soudure des électrodes positives 2.1, 2.2. Une bande du collecteur de courant 20 de longueur f = 24 mm et de largeur e = 9 mm est découpée pour permettre la soudure des électrodes négatives 3.1, 3.2.

Comme montré aux figures 13A et 13B, l'électrode négative d'extrémité 3.2 comprend quatre motifs d'électrode 33 reliés entre eux par un unique substrat collecteur de courant 30. Les quatre motifs 33 sont situés sur la même face 30 du collecteur.

A titre indicatif, dans cet exemple 2, les quatre motifs d'électrode 33 sont de forme rectangulaire et ont chacun pour largeur g = 17 mm et longueur h = 18 mm. La distance i entre deux motifs 23 adjacents est de 7 mm. La zone 30s constitue la zone de soudure des électrodes négatives 3.1, 3.2. Deux bandes du collecteur de courant 30 de longueur h = 18 mm et de largeur i = 7 mm sont découpées. Cela diminue le poids de l'accumulateur et augmente sa flexibilité dans ces zones.

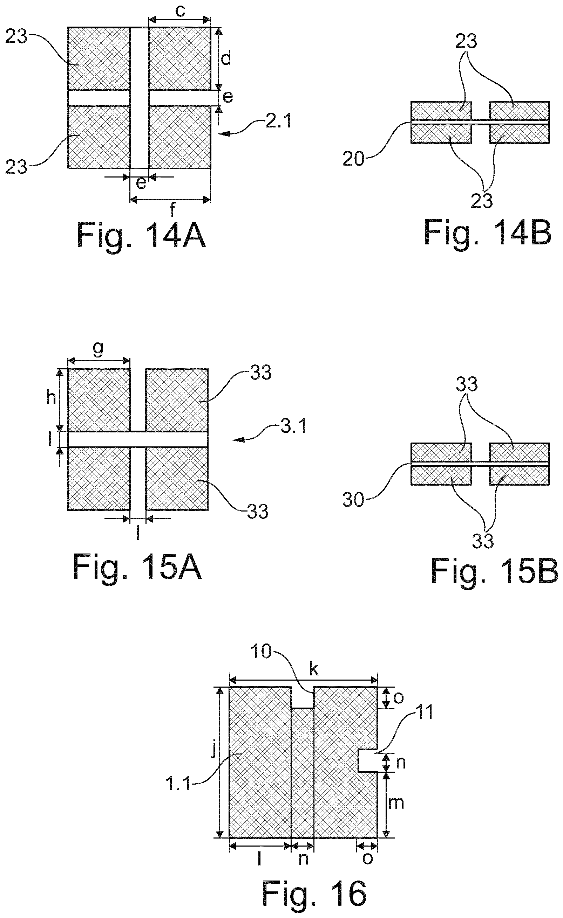

Comme montré aux figures 14A et 14B, l'électrode positive centrale 2.1 comprend huit motifs d'électrode 23 reliés entre eux par un unique substrat collecteur de courant 20. Chaque face 21, 22 du collecteur 20 comprend quatre motifs 23. Chacun des motifs 23 d'une face 21 est en regard d'un motif de l'autre face 22.

A titre indicatif, dans cet exemple 2, les huit motifs d'électrode 23 sont de forme rectangulaire et ont chacun pour largeur c = 15 mm et longueur d = 16 mm. La distance e entre chaque motif est de 9 mm. La zone 20s constitue la zone de soudure des électrodes positives 2.1, 2.2. Une bande du collecteur de courant de longueur f = 24 mm et de largeur e = 9 mm est découpée pour permettre la soudure des électrodes négatives 3.1, 3.2.

Comme montré aux figures 15A et 15B, l'électrode négative centrale 3.1 comprend huit motifs d'électrode 33 reliés entre eux par un unique substrat collecteur de courant 30. Chaque face 31, 32 du collecteur 30 comprend quatre motifs 33. Chacun des motifs 33 d'une face 31 est en regard d'un motif de l'autre face 32.

A titre indicatif, dans cet exemple 2, les huit motifs d'électrodes sont de forme rectangulaire et ont chacun pour largeur g = 17 mm et longueur h = 18 mm. La distance i entre chaque motif est de 7 mm. La zone 30s constitue la zone de soudure des électrodes négatives. Deux bandes du collecteur de courant de longueur h = 18 mm et de largeur i = 7 mm sont découpées ici encore pour augmenter la flexibilité de l'accumulateur

La figure 16 représente un film de séparateur isolant 1.1.

A titre indicatif, dans cet exemple 2, la feuille 1.1 a pour longueur j = 45 mm et largeur k = 43 mm. Les zones 10 et 11 du séparateur 1.1 chacune de largeur n = 5 et de longueur o = 7 mm, ont été découpées pour permettre la soudure des électrodes positives et négatives. La zone 10 est distante de 1 = 19 mm du bord de la feuille 1.1 et la zone 11 est distante de m = 20 mm du bord du film 1.1.

L'empilement des différents composants de l'accumulateur est montré en figure 10. Une fois l'empilement réalisé, les électrodes positives 2.1 et 2.2 sont soudées entre elles selon le point de soudure réalisé dans les zones 20s, et les électrodes positives 2.1 et 2.2 sont soudées entre elles selon le point de soudure réalisé dans les zones 30s.

A titre d'exemple illustratif, les caractéristiques techniques du prototype d'accumulateur qui a été réalisé selon cet exemple 2 sont données dans le tableau suivant :

| Caractéristiques électrodes | | |
|---|---|---|
| Type électrode | Electrode positive | Electrode négative |
| Nature matière active | LiFePO₄ | Graphite |
| % matière active | 90,5 | 96 |
| % conducteurs électroniques | 5 | 0 |
| % liant | 4,5 | 4 |

| Spécifications de l'accumulateur | | |
|---|---|---|
| Surface totale à l'exclusion des surfaces des connectiques (cm²) | 29,15 | |
| Epaisseur max (mm) | 0,85 | |
| Tension nominale (V) | 3,2 | |
| Limites de cyclage (V) | 2,6 - 3,7 | |
| Capacité surfacique (mAh/cm²) | 3 | |
| Capacité pratique attendue (mAh) | 86 | |
| Nature de l'électrolyte | LP10 (LiPF₆ 1M dans EC/PC/DMC 1/1/3 2%VC) | |

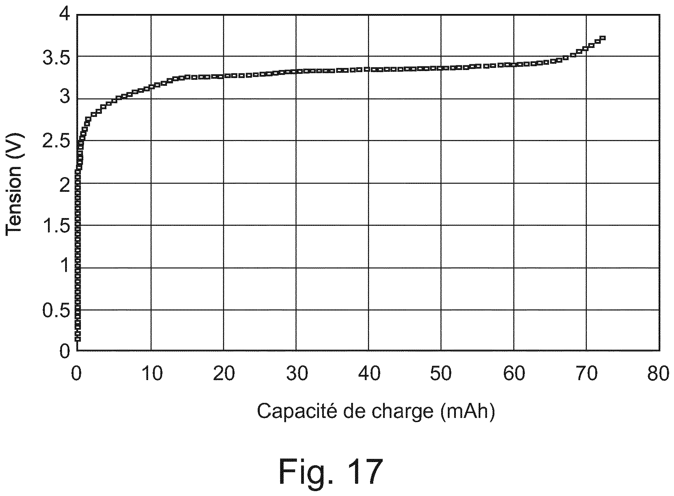

La capacité spécifique du prototype selon cet exemple 2 a été évaluée et est indiquée sous forme de courbe en figure 17.

Comparativement à une batterie selon l'état de l'art, à quatre accumulateurs connectés en parallèle, l'accumulateur selon cet exemple 2 ne nécessite que la mise en place de six bandes de scellage 60 au lieu de 16 et d'une bande de soudure 24 au lieu de quatre. Cela apporte donc un gain en capacité surfacique et donc en densité d'énergie volumique pour l'accumulateur selon l'invention.

### Exemple 3 :

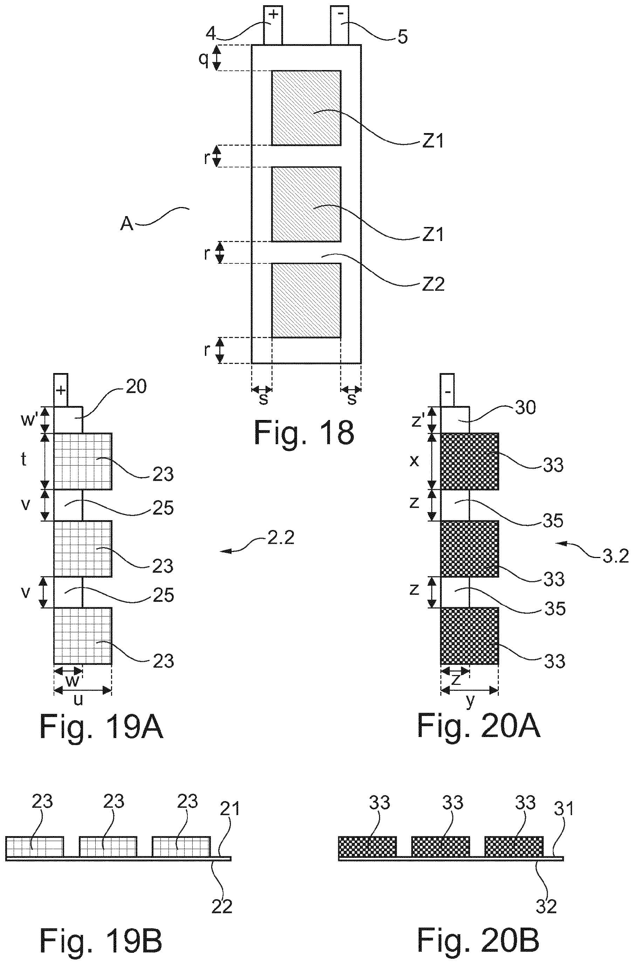

Dans cet exemple 3 illustré aux figures 18 à 23, l'accumulateur A comprend dans sa partie centrale de l'empilement une électrode positive 2.1 et une électrode négative 3.1, et à chacune des extrémités de l'empilement une électrode positive 2.2 et une électrode négative 3.2.

Les électrodes centrales 2.1 ; 3.1 comprennent trois motifs de matériau actif 23 ; 33 alignés, sur chacune des faces 21, 22 ; 31, 32 des collecteurs de courant 20 ; 30.

Les électrodes d'extrémité 2.2 ; 3.2 comprennent quant à elles trois motifs de matériau actif 23 ; 33 alignés sur une seule des faces 21 ; 31 des collecteurs de courant 20 ; 30.

En vue de dessus de la figure 18, on distingue trois zones identiques Z1 occupées par les motifs d'électrodes 23 ; 33 empilés les uns sur les autres et les zones Z2 qui en sont dépourvues et sont donc occupées uniquement par les parties de substrats collecteurs de courant nues 25, 35 et les films de séparateur 1.1, 1.2, 1.3. Les zones Z1 sont donc moins flexibles que les zones Z2. Comme délimité par les pointillés en figure 18, l'accumulateur comprend un nombre de six zones flexibles Z2.

A titre indicatif, dans cet exemple 3, une zone Z2 est de forme rectangulaire avec une longueur égale à 29 mm et une largeur égale à q = 10 mm, trois zones Z2 sont de forme rectangulaire avec une longueur égale à 29 mm et une largeur égale à r = 5 mm et deux zones Z2 sont rectangulaires avec une longueur égale à 85 mm et une largeur égale à s = 5 mm.

Comme montré aux figures 19A et 19B, l'électrode positive d'extrémité 2.2 comprend trois motifs d'électrode 23 reliées entre eux par un unique substrat collecteur de courant 20. Les trois motifs 23 sont situés sur la même face 20 du collecteur.

A titre indicatif, dans cet exemple 3, les trois motifs d'électrode 23 sont de forme rectangulaire et ont chacun pour longueur t = 16 mm et largeur u = 15 mm. Comme délimité par les pointillés en figure 19A, l'électrode positive d'extrémité 2.2 comprend un nombre de trois zones flexibles, dépourvues de motifs d'électrode 23, dont deux zones rectangulaires de longueur v = 9 mm et de largeur w = 7 mm et une zone carrée de côté w et w' = 7 mm. La zone 20s constitue la zone de soudure des électrodes positives 2.1, 2.2.

Comme montré aux figures 20A et 20B, l'électrode négative d'extrémité 3.2 comprend trois motifs d'électrode 33 reliés entre eux par un unique substrat collecteur de courant 30. Les trois motifs 33 sont situés sur la même face 30 du collecteur.

A titre indicatif, dans cet exemple 3, les motifs d'électrode 33 sont de forme rectangulaire et ont chacun pour longueur x = 18 mm et largeur y = 17 mm. Comme délimité par les pointillés en figure 20A, l'électrode négative d'extrémité 3.2 comprend un nombre de trois zones flexibles, dépourvues de motifs 33 dont deux zones carrées de côté z = 7 mm et une zone rectangulaire de longueur z = 7 mm et de largeur *z'* = 6 mm. La zone 30s constitue la zone de soudure des électrodes négatives 3.1, 3.2.

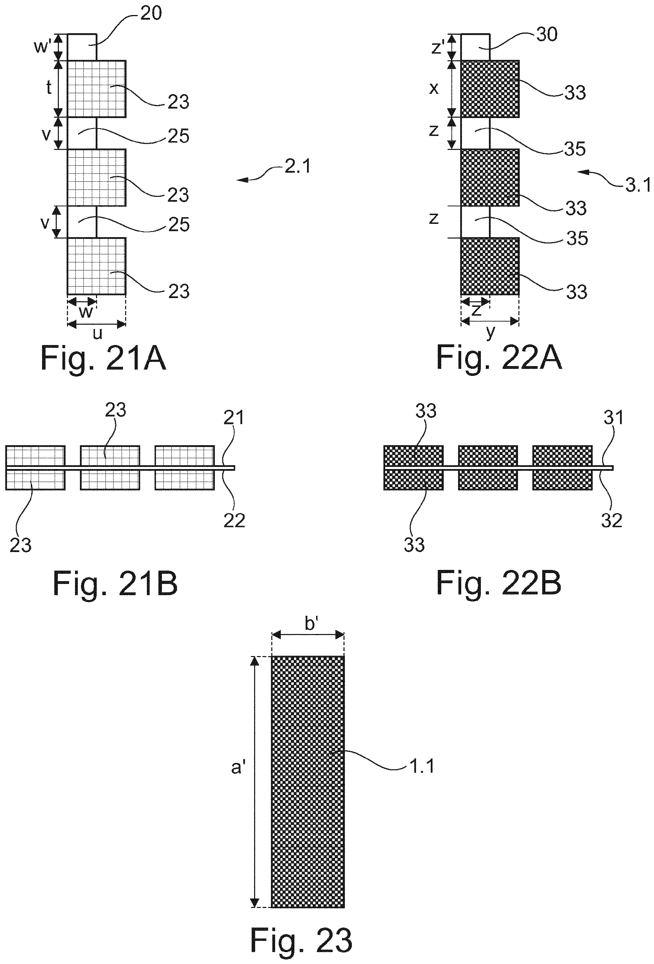

Comme montré aux figures 21A et 21B, l'électrode positive centrale 2.1 comprend six motifs d'électrode 23 reliés entre eux par un unique substrat collecteur de courant 20. Chaque face 21, 22 du collecteur 20 comprend trois motifs 23. Chacun des motifs 23 d'une face 21 est en regard d'un motif de l'autre face 22.

A titre indicatif, dans cet exemple 3, les six motifs d'électrode 23 sont de forme rectangulaire et ont chacun pour longueur t = 16 mm et largeur u = 15 mm. Comme délimité par les pointillés en figure 21A, l'électrode positive centrale 2.1 comprend un nombre de trois zones flexibles, dépourvues de motifs 23 dont deux zones rectangulaires de longueur *v* = 9 mm et de largeur w = 7 mm et une zone carrée de côté w et w' = 7 mm. La zone 30s constitue la zone de soudure des électrodes négatives 3.1, 3.2.

Comme montré aux figures 22A et 22B, l'électrode négative centrale 3.1 comprend six motifs d'électrode 33 reliés entre eux par un unique substrat collecteur de courant 30. Chaque face 31, 32 du collecteur 30 comprend trois motifs 33. Chacun des motifs 33 d'une face 31 est en regard d'un motif de l'autre face 32.

A titre indicatif, dans cet exemple 3, les six motifs d'électrode 33 sont de forme rectangulaire et ont chacun pour longueur ***x*** = 18 mm et largeur ***y*** = 17 mm. Comme délimité par les pointillés en figure 22A, l'électrode négative centrale 3.1 comprend un nombre de trois zones flexibles, dépourvues de motifs 33 dont deux zones carrées de côté z = 7 mm et une zone rectangulaire de longueur z = 7 mm et de largeur z' = 6 mm. La zone 30s constitue la zone de soudure des électrodes négatives 3.1, 3.2.

La figure 23 représente un film de séparateur isolant 1.1.

A titre indicatif, dans cet exemple 3, le film 1.1 a pour longueur a' = 70 mm et largeur b' = 19 mm.

### Exemple 4 :

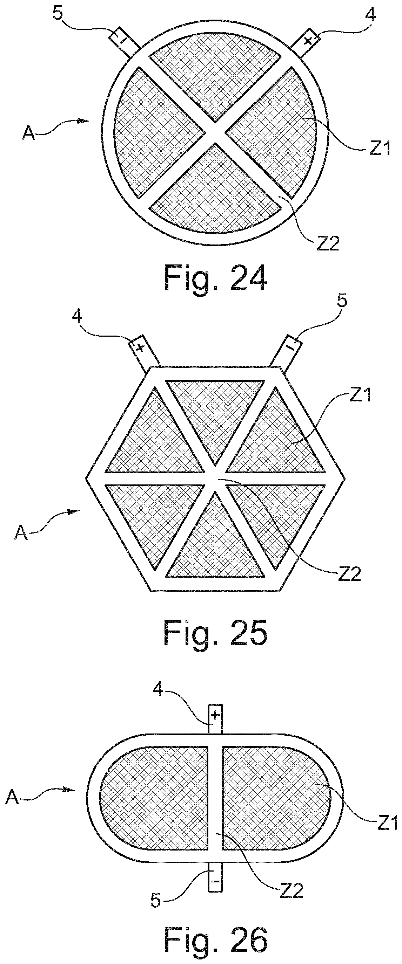

Comme illustré en vue de face en figure 24, l'accumulateur est de forme sphérique, avec un empilement de substrats collecteurs 20, 30 de section circulaire et des motifs d'électrode 23 ; 33 de section en portion de cercle agencés selon un cercle concentrique à celui des substrats.

Dans cet exemple 4, l'accumulateur comprend un nombre de quatre zones Z1 occupées par les motifs d'électrode 23 ; 33 et qui sont plus rigides que les zones Z2 qui en sont dépourvues et occupées uniquement par les parties des collecteurs de courant nues 25, 35 et le séparateur 1.

### Exemple 5 :

Comme illustré en vue de face en figure 25, l'accumulateur est de forme hexagonale avec un empilement de substrats collecteurs 20, 30 de section hexagonale et des motifs d'électrode 23 ; 33 de section triangulaire agencés selon un hexagone homothétique à celui des substrats 20 ; 30.

Dans cet exemple 5, l'accumulateur comprend un nombre de six zones Z1 occupées par les motifs d'électrode 23 ; 33 et qui sont plus rigides que les zones Z2 qui en sont dépourvues et occupées uniquement par les parties de collecteurs de courant nues 25, 35 et le séparateur 1.

### Exemple 6 :

Comme illustré en vue de face en figure 26, l'accumulateur est de forme oblongue avec un empilement de substrats collecteurs 20, 30 de section oblongue, et deux motifs d'électrode 23 ; 33 de section semi-oblongue agencés en regard l'un de l'autre selon une section oblongue homothétique à celle des substrats 20, 30.

Dans cet exemple 6, l'accumulateur comprend un nombre de deux zones Z1 occupées par les motifs d'électrode 23 ; 33 et qui sont plus rigides que les zones Z2 qui en sont dépourvues et occupées uniquement par les parties de collecteurs de courant nues 25, 35 et le séparateur 1.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

L'objet de l'invention est exclusivement définie par les revendications.

## Revendications

1. Accumulateur électrochimique (A) métal-ion, comprenant un empilement des éléments suivants:
- au moins un premier (20) et au moins un deuxième (30) substrat électriquement conducteur formant collecteur de courant comprenant chacun deux faces principales (21, 22 ; 31, 32), supportant chacune au moins deux motifs de matériau actif d'électrode (23 ; 33) en définissant une électrode (2.1 ; 3.1), les deux motifs de chacune des faces étant distants l'un de l'autre en définissant une zone (25 ; 35) dépourvue de motifs, chaque motif d'une face d'un substrat étant supporté dans une même zone qu'un motif de l'autre face du même substrat;
- au moins un film de séparateur isolant électriquement (1.1) intégrant un électrolyte, agencé en contact avec chacun des motifs d'électrode supportés par l'une des faces du premier et du deuxième substrat ;
- un emballage souple (6) agencé pour contenir le premier et le deuxième substrat et le film de séparateur, avec étanchéité tout en étant traversé par un premier et un deuxième pôles de l'accumulateur respectivement reliés ou constitués par une partie du premier ou du deuxième substrat ;
accumulateur dans lequel :
- les motifs d'électrode d'un même substrat sont de même polarité ;
- les motifs d'électrode du deuxième substrat sont de polarité opposée à ceux du premier substrat;
- les motifs d'électrode du deuxième substrat sont superposés avec ceux du premier substrat dans la direction de l'empilement, les motifs d'électrode du deuxième substrat étant isométriques avec ceux du premier substrat ou la surface de chaque motif de l'électrode négative étant supérieure à la surface de chaque motif de l'électrode positive ;
- les zones dépourvues de motifs des substrats sont flexibles et définissent ainsi des lignes de pliage de l'accumulateur ;
- les substrats sont de même section que les motifs dans les zones de ses faces qui les supportent, tandis qu'ils sont de section moindre dans les zones dépourvues de motifs, les zones dépourvues de motifs comportant des découpes créant des zones sans matière entre deux motifs adjacents sur une même face d'un substrat.

2. Accumulateur selon la revendication 1, comprenant en outre :
- deux substrats (20, 30) d'extrémité de l'empilement, constitués par un troisième et un quatrième substrat électriquement conducteur formant collecteur de courant comprenant chacun deux faces principales, dont l'une supporte au moins deux motifs de matériau actif d'électrode et l'autre face est dépourvue de matériau actif en définissant une électrode d'extrémité (2.2 ; 3.2), les deux motifs étant distants l'un de l'autre en définissant une zone dépourvue de motifs;
- deux films (1.2, 1.3) de séparateur isolant électriquement dont l'un est agencé en contact avec chacun des motifs d'électrode supportés par l'une des faces du premier substrat et ceux du quatrième substrat et l'autre est agencé en contact avec chacun des motifs d'électrode supportés par l'une des faces du deuxième substrat et ceux de la première face du troisième substrat ;
et dans lequel :
- les motifs d'électrode du troisième substrat sont de même polarité que ceux du premier substrat tandis que ceux du quatrième substrat sont de même polarité que ceux du deuxième substrat ;
- les motifs d'électrode du troisième et quatrième substrat sont superposés avec ceux du premier et du deuxième substrat dans la direction de l'empilement, les motifs des électrodes négatives et positives étant isométriques ou, le cas échéant, la surface de chaque motif d'électrode négative étant supérieure à la surface de chaque motif d'électrode positive ;
- le troisième substrat est soudé au(x) premier(s) substrat(s) à au moins un point de leurs zones dépourvues de motifs d'électrode tandis que le quatrième substrat est soudé au(x) deuxième(s) substrat(s) à au moins un point de leurs zones dépourvues de motifs d'électrode.

3. Accumulateur selon la revendication 1 ou 2, les motifs d'électrode étant de section carrée ou rectangulaire.

4. Accumulateur selon l'une quelconque des revendications précédentes, les substrats supportant sur une face principale, au moins trois motifs d'électrode superposés, les motifs des électrodes négatives et positives étant isométriques ou, le cas échéant, la surface de chaque motif d'électrode négative étant supérieure à la surface de chaque motif d'électrode positive.

5. Accumulateur selon l'une quelconque des revendications 1 à 3, les substrats supportant sur une face principale, quatre motifs d'électrode agencés en carré ou en rectangle, les premier et troisième substrats étant en forme de U dans leurs parties reliant les motifs d'électrode entre eux tandis que les deuxième et quatrième substrats sont en forme de I dans leurs parties reliant les motifs d'électrode entre eux.

6. Accumulateur selon la revendication 1 ou 2, les substrats étant de section circulaire, les motifs d'électrode d'un substrat étant de section en portion de cercle agencés selon un cercle concentrique à celui des substrats.

7. Accumulateur selon la revendication 1 ou 2, les substrats étant de section de polygone régulier, les motifs d'électrode d'un substrat étant de section triangulaire agencés selon un polygone homothétique à celui du substrat.

8. Accumulateur selon la revendication 1 ou 2, les substrats étant de section oblongue, chaque substrat comprenant sur au moins une de ses faces principales deux motifs d'électrode chacun de section semi-oblongue agencés en regard l'un de l'autre selon une section oblongue homothétique à celle du substrat.

9. Accumulateur selon l'une quelconque des revendications précédentes constituant un accumulateur Li-ion, les motifs d'électrode étant en matériau d'insertion au Lithium.

10. Utilisation de l'accumulateur selon l'une des revendications précédentes pour alimenter électriquement une électrode souple de stimulation transdermique, l'accumulateur étant intégré dans l'enveloppe de l'électrode.

## Patentansprüche

1. Elektrochemischer Metall-Ionen-Akkumulator (A), umfassend einen Stapel aus den folgenden Elementen:
- mindestens ein erstes (20) und mindestens ein zweites (30) elektrisch leitfähiges Substrat, die einen Stromkollektor bilden und jeweils zwei Hauptseiten (21, 22; 31, 32) umfassen, von denen jede mindestens zwei Muster aus Elektrodenaktivmaterial (23; 33) trägt, wobei eine Elektrode (2.1; 3.1) definiert wird, wobei die beiden Muster jeder der Seiten voneinander entfernt sind und dabei einen Bereich (25; 35) ohne Muster definieren, wobei jedes Muster einer Seite eines Substrats in dem gleichen Bereich wie ein Muster der anderen Seite desselben Substrats getragen wird;
- mindestens ein elektrisch isolierender Separatorfilm (1.1), der einen Elektrolyten beinhaltet und in Kontakt mit jedem der Elektrodenmuster angeordnet ist, die von der einen der Seiten des ersten und des zweiten Substrats getragen werden;
- eine flexible Verpackung (6), die angeordnet ist, um das erste und das zweite Substrat und den Separatorfilm dicht zu enthalten, wobei sie von einem ersten und einem zweiten Pol des Akkumulators durchquert wird, die jeweils durch einen Teil des ersten oder des zweiten Substrats verbunden sind oder daraus bestehen;
wobei in dem Akkumulator:
- die Elektrodenmuster desselben Substrats die gleiche Polarität haben;
- die Elektrodenmuster des zweiten Substrats eine zu denen des ersten Substrats entgegengesetzte Polarität haben;
- die Elektrodenmuster des zweiten Substrats mit denen des ersten Substrats in Richtung des Stapels überlagert sind, wobei die Elektrodenmuster des zweiten Substrats isometrisch zu denen des ersten Substrats sind oder die Fläche jedes Musters der negativen Elektrode größer als die Fläche jedes Musters der positiven Elektrode ist;
- die Bereiche ohne Muster der Substrate flexibel sind und so Biegelinien des Akkumulators definieren;
- die Substrate den gleichen Querschnitt wie die Muster haben in den Bereichen ihrer Seiten, die sie tragen, während sie in den Bereichen ohne Muster einen kleineren Querschnitt haben, wobei die Bereiche ohne Muster Ausschnitte beinhalten, die materiefreie Bereiche zwischen zwei benachbarten Mustern auf derselben Seite eines Substrats erzeugen.

2. Akkumulator nach Anspruch 1, umfassend ferner:
- zwei Endsubstrate (20, 30) des Stapels, die aus einem dritten und einem vierten elektrisch leitfähigen Substrat bestehen, die einen Stromkollektor bilden und jeweils zwei Hauptseiten umfassen, von denen die eine mindestens zwei Muster aus Elektrodenaktivmaterial trägt und die andere Seite aktivmaterialfrei ist, wobei eine Endelektrode (2.2; 3.2) definiert wird, wobei die beiden Muster voneinander entfernt sind und dabei einen Bereich ohne Muster definieren;
- zwei elektrisch isolierende Separatorfilme (1.2, 1.3), von denen der eine in Kontakt mit jedem der Elektrodenmuster, die von der einen der Seiten des ersten Substrats getragen werden, und denen des vierten Substrats angeordnet ist, und der andere in Kontakt mit jedem der Elektrodenmuster, die von der einen der Seiten des zweiten Substrats getragen werden, und denen der ersten Seite des dritten Substrats angeordnet ist;
und in dem:
- die Elektrodenmuster des dritten Substrats die gleiche Polarität haben wie die des ersten Substrats, während die des vierten Substrats die gleiche Polarität haben wie die des zweiten Substrats;
- die Elektrodenmuster des dritten und vierten Substrats mit denen des ersten und des zweiten Substrats in Richtung des Stapels überlagert sind, wobei die Muster der negativen und positiven Elektroden isometrisch sind oder gegebenenfalls die Fläche jedes Musters einer negativen Elektrode größer als die Fläche jedes Musters einer positiven Elektrode ist;
- das dritte Substrat an das(die) erste(n) Substrat(e) in mindestens einem Punkt ihrer Bereiche ohne Elektrodenmuster geschweißt ist, während das vierte Substrat an das(die) zweite(n) Substrat(e) in mindestens einem Punkt ihrer Bereiche ohne Elektrodenmuster geschweißt ist.

3. Akkumulator nach Anspruch 1 oder 2, wobei die Elektrodenmuster einen quadratischen oder rechteckigen Querschnitt haben.

4. Akkumulator nach einem der vorhergehenden Ansprüche, wobei die Substrate auf einer Hauptseite mindestens drei überlagerte Elektrodenmuster tragen, wobei die Muster der negativen und positiven Elektroden isometrisch sind oder gegebenenfalls die Fläche jedes Musters einer negativen Elektrode größer als die Fläche jedes Musters einer positiven Elektrode ist.

5. Akkumulator nach einem der Ansprüche 1 bis 3, wobei die Substrate auf einer Hauptseite vier zu einem Quadrat oder Rechteck angeordnete Elektrodenmuster tragen, wobei die ersten und dritten Substrate in ihren die Elektrodenmuster untereinander verbindenden Teilen U-förmig sind, während die ersten und vierten Substrate in ihren die Elektrodenmuster untereinander verbindenden Teilen I-förmig sind.

6. Akkumulator nach Anspruch 1 oder 2, wobei die Substrate einen kreisförmigen Querschnitt haben, wobei die Elektrodenmuster eines Substrats den Querschnitt eines Kreisausschnitts haben und gemäß einem Kreis angeordnet sind, der konzentrisch zu dem der Substrate ist.

7. Akkumulator nach Anspruch 1 oder 2, wobei die Substrate den Querschnitt eines regelmäßigen Polygons haben, wobei die Elektrodenmuster eines Substrats den Querschnitt eines Dreiecks haben und gemäß einem Polygon angeordnet sind, das homothetisch zu dem des Substrats ist.

8. Akkumulator nach Anspruch 1 oder 2, wobei die Substrate von länglichem Querschnitt sind, wobei jedes Substrat auf mindestens einer seiner Hauptseiten zwei Elektrodenmuster mit jeweils halblänglichem Querschnitt umfasst, die einander gegenüber gemäß einem länglichen Querschnitt angeordnet sind, der homothetisch zu dem des Substrats ist.

9. Akkumulator nach einem der vorhergehenden Ansprüche, der einen Li-Ionen-Akkumulator darstellt, wobei die Elektrodenmuster aus Lithiumeinlagerungsmaterial sind.

10. Verwendung des Akkumulators nach einem der vorhergehenden Ansprüche zur Stromversorgung einer flexiblen Elektrode zur transkutanen Stimulation, wobei der Akkumulator in die Hülle der Elektrode eingearbeitet ist.

## Claims

1. A metal-ion electrochemical accumulator (A), comprising a stack of the following elements:
- at least one first (20) and at least one second (30) electrically conductive substrate forming a current collector, each comprising two main faces (21, 22; 31, 32), each supporting at least two electrode active material units (23; 33) defining an electrode (2.1; 3.1), the two units of each of the faces being separated from each other defining a zone (25; 35) free of units, each unit of one face of a substrate being supported in the same zone as a unit of the other face of the same substrate;
- at least one electrically insulating separating film (1.1) incorporating an electrolyte, arranged in contact with each of the electrode units supported by one of the faces of the first and of the second substrate;
- a flexible packaging (6) arranged to contain the first and the second substrate and the separating film, with leaktightness while at the same time being traversed by a first and a second terminal of the accumulator, which are respectively connected or constituted by a portion of the first or of the second substrate;
in which accumulator:
- the electrode units of the same substrate have the same polarity;
- the electrode units of the second substrate are isometric and superposed with those of the first substrate in the stacking direction;
- the electrode units of the second substrate are of polarity opposite to the polarity of those of the first substrate;
- the zones free of substrate units are flexible and thus define folding lines of the accumulator;
- the substrates have the same cross-section as the units in the zones of its faces supporting them, whereas they are of smaller cross section in the unit-free zones, the unit-free zones including cutouts creating zones without material between two adjacent units on the same face of a substrate.

2. The accumulator as claimed in claim 1, also comprising:
- two end substrates (20, 30) of the stack, constituted by a third and a fourth electrically conductive substrate forming a current collector, each comprising two main faces, of which one supports at least two electrode active material units and the other face is free of active material defining an end electrode (2.2; 3.2), the two units being separated from each other defining a zone free of units;
- two electrically insulating separating films (1.2, 1.3), of which one is arranged in contact with each of the electrode units supported by one of the faces of the first substrate and those of the fourth substrate and the other is arranged in contact with each of the electrode units supported by one of the faces of the second substrate and those of the first face of the third substrate;
and in which:
- the electrode units of the third substrate have the same polarity as those of the first substrate, whereas those of the fourth substrate have the same polarity as those of the second substrate;
- the electrode units of the third and fourth substrate are isometric and superposed with those of the first and second substrate in the stacking direction;
- the third substrate is welded to the first substrate(s) at at least one point of their zones free of electrode units, whereas the fourth substrate is welded to the second substrate(s) at at least one point of their zones free of electrode units.

3. The accumulator as claimed in claim 1 or 2, the electrode units being of square or rectangular cross section.

4. The accumulator as claimed in any one of the preceding claims, the substrates supporting, on a main face, at least three isometric and superposed electrode units or eventually, the surface area of each negative electrode unit being greater than the surface area of each positive electrode unit.

5. The accumulator as claimed in any one of claims 1 to 3, the substrates supporting, on a main face, four electrode units arranged in a square or in a rectangle, the first and third substrates being U-shaped in their parts connecting the electrode units together, whereas the second and fourth substrates are I-shaped in their parts connecting the electrode units together.

6. The accumulator as claimed in claim 1 or 2, the substrates being of circular cross section, the electrode units of a substrate being of circle-portion cross section arranged in a circle concentric to that of the substrates.

7. The accumulator as claimed in claim 1 or 2, the substrates being of regular polygonal cross section, the electrode units of a substrate having a triangular cross section arranged in a polygon homothetic to that of the substrate.

8. The accumulator as claimed in claim 1 or 2, the substrates being of oblong cross section, each substrate comprising, on at least one of its main faces, two electrode units each of semi-oblong cross section arranged facing each other in an oblong cross section homothetic to that of the substrate.

9. An accumulator according to anyone of the preceding claims, constituting an Li-ion accumulator, the electrode units being made of lithium insertion material.

10. The use of the accumulator as claimed in one of the preceding claims, for electrically powering a flexible transdermal stimulation electrode, the accumulator being integrated into the envelope of the electrode.
